# EUROPÄISCHE PATENTANMELDUNG

(11) **EP 2 991 149 A1**
(43) Veröffentlichungstag der Anmeldung: **02.03.2016**
(21) Anmeldenummer: 15170383.2
(22) Anmeldetag: 03.06.2015
(51) Int. Cl.: H01M 8/24, H01M 8/04, H01M 8/12

(54) **HOTBOX EINES BRENNSTOFFZELLENSYSTEMS**

(30) Priorität: 27.08.2014 DE 102014217020
(71) Anmelder: Vaillant GmbH, 42859 Remscheid (DE)
(72) Erfinder: Reinert, Andreas, 58455 Witten (DE); Folkerts, Gordon, 40625 Düsseldorf (DE); Heiler, Christian, 44787 Bochum (DE); Autermann, Andre, 40627 Düsseldorf (DE); Lis, Raimund, 42369 Wuppertal (DE)
(74) Vertreter: Popp, Carsten

(57) **Zusammenfassung**

Die Erfindung betrifft die Hotbox eines Brennstoffzellensystems zur Kraft-Wärme-Kopplung. Die Oberfläche (1) des Hotbox-Gehäuses (1) wird dadurch gekühlt, dass die Verbrennungsluft durch oberflächennahe Kanäle (2, 3) geleitet wird. Ein Strömungsverteilelement (19) stellt sicher, dass der Massenstrom in den Kanälen (2, 3) über die Breite gleichverteilt ist.

## Beschreibung

Die Erfindung betrifft eine Hotbox eines Brennstoffzellensystems zur Kraft-Wärme-Kopplung, umfassend zumindest einen Brennstoffzellenstapel und Nebenaggregate und ein den Brennstoffzellenstapel und die Nebenaggregate umschließendes Hotbox-Gehäuse. Brennstoffzellensysteme zur Kraft-Wärme-Kopplung wandeln die in einem Brennstoff gespeicherte chemische Energie unter Verwendung von Luftsauerstoff in elektrische Energie um. Die dabei anfallende Wärme wird benutzt, um ein Gebäude oder um Brauchwasser zu erwärmen. Die Hotbox umfasst dabei die Aggregate, die im Betrieb eine hohe Temperatur aufweisen.

Gattungsgemäße Brennstoffzellensysteme sind vorgesehen für die Aufstellung in Wohngebäuden oder im Gewerbegebäuden. Insbesondere bei dem Einsatz von Hochtemperatur-Brennstoffzellen wie zum Beispiel SOFC-Brennstoffzellen ergibt sich die Problematik, dass aufgrund der hohen Temperaturen des Brennstoffzellenstapels sich hohe Oberflächentemperaturen der Hotbox und damit des Brennstoffzellensystems einstellen können, was einerseits zu einer erhöhten Abwärme und andererseits zu einer Verbrennungsgefahr führt. Daher weisen Hotboxen gattungsgemäßer Brennstoffzellensysteme in der Regel dickwandige Isolierungen auf. Dies erhöht das Bauvolumen des Brennstoffzellensystems. Die Patentanmeldung WO 2014/081651 A1 offenbart eine solche Wärmedämmung für Brennstoffzellen.

Es ist daher Aufgabe der Erfindung, ein gattungsgemäßes Brennstoffzellensystem so weiterzubilden, dass bei geringem Bauvolumen des Brennstoffzellensystems über zumindest einen großen Bereich des Hotbox-Gehäuses eine niedrige Oberflächentemperatur erreicht wird.

Dies wird durch eine Hotbox eines Brennstoffzellensystem gemäß den Merkmalen des unabhängigen Anspruchs erreicht. Dazu wird erfindungsgemäß die von dem Brennstoffzellenstapel und/oder den Nebenaggregaten des Brennstoffzellenstapels, insbesondere einem Reformer sauerstoffhaltige Luft parallel zur und nahe der Hotbox-Gehäuseoberfläche geführt, so dass die angesaugte Luft das Hotbox-Gehäuse kühlt. Dadurch ist es möglich, in den Bereichen, in denen die Hotbox-Gehäuseoberfläche gekühlt wird, die Wärmedämmung dünner auszuführen, wodurch das Hotbox-Gehäusevolumen insgesamt reduziert wird. Dabei sind die Luftkanäle, durch die die Luft geleitet wird, so ausgebildet, dass ein gleichmäßiger Luft-Massenstrom an der Hotbox-Gehäuseoberfläche entlang geführt wird, so dass keine Bereiche des Hotbox-Gehäuses eine höhere Temperatur aufweisen. Unter gleichmäßig wird hier erfindungsbemäß verstanden, dass über die Breite des Luftkanals oder der Luftkanäle der luftkanalbreitenbezogene Luftmassenstrom nur wenig varüert. Der luftkanalbreitenbezogene Luftmassenstrom ist somit eine physikalische Größe, die einen Massenstrom pro Längeneinheit beschreibt, wobei der Vektor der Längeneinheit senkrecht zur Strömungsrichtung des Massenstroms ist. Bis bewirkt im Prinzip, dass ein gleichmäßiger Luftvorhang durch die Kanäle oder den Kanal gefördert wird. Geringe Unterschiede in der Massenstromverteilung bewirken erfindungsgemäß, dass keine Bereiche des Hotbox-Gehäuses eine zu geringe Kühlwirkung durch den Luftmassenstrom aufweisen.

Es ist zwar aus der Patentanmeldung EP 2 660 914 A1 bekannt, zugeführte Luft zur Kühlung des Brennstoffzellenstapels zu verwenden. Die Lehre der EP 2 660 914 A1 enthält jedoch keine Hinweise, die Oberflächentemperatur des Hotbox-Gehäuses gleichmäßig zu senken.

Vorteilhafte Weiterbildungen werden durch die abhängigen Ansprüche geschützt.

Die Erfindung wird nun anhand der Figuren detailliert erläutert. Es stellen dar:
Figur 1: ein erfindungsgemäße Hotbox eines Brennstoffzellensystem im Schnitt in vertikaler Ebene,
Figur 2: die Hotbox eines Brennstoffzellensystems aus Figur 1 im Schnitt in horizontaler Ebene,
Figur 3: eine Ausführungsvariante der Hotbox eines Brennstoffzellensystems im Schnitt in horizontaler Ebene,
Figur 4: im Detail das Strömungsverteilelement,
Figur 5: im Detail das Strömungsverteilelement mit der inneren und äußeren Trennwand.

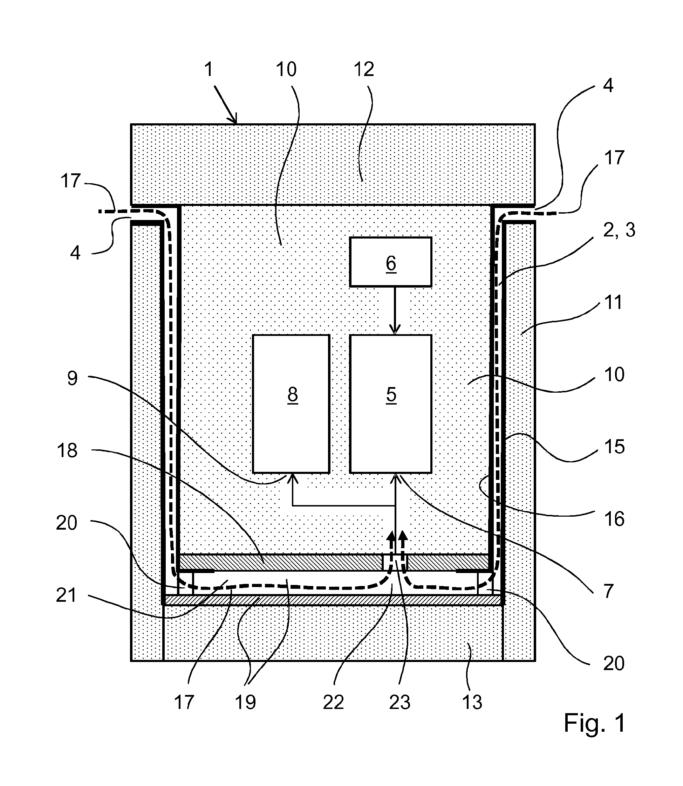

Figur 1 zeigt eine erfindungsgemäße Hotbox eines Brennstoffzellensystems im Schnitt in vertikaler Ebene. Brennstoffzellensysteme zur Kraft-Wärme-Kopplung sind aus dem Stand der Technik bekannt und wandeln die im Brennstoff gespeicherte chemische Energie unter Verwendung von Luftsauerstoff in elektrische Energie und Wärme. Die elektrische Energie wird zur internen Verwendung im Gebäude oder zur externen Einspeisung ins Stromnetz genutzt. Die dabei entstehende Wärme wird über einen in Figur 1 nicht dargestellten Wärmetauscher ausgekoppelt und für Heizzwecke nach außen geleitet. Aus Gründen der Vereinfachung stellt Figur 1 lediglich den Brennstoffzellenstapel 5 und Nebenaggregate 8 als Blockschaltbild dar. Der Brennstoffzellenstapel 5 wird mit Luftsauerstoff über einen Lufteingang 7 und mit Brennstoff über einen Brennstoffeingang 6 versorgt. Die üblicherweise in einem Brennstoffzellensystem vorhandenen Nebenaggregate sind hier im Funktionsblock 8 zusammengefasst. Insbesondere sei ihr der Reformer erwähnt, der den Brennstoff, beispielsweise Erdgas, für die Verwendung in der Brennstoffzelle unter Zuhilfenahme von Luftsauerstoff aufbereitet. Dieser Brennstoff wird dann über den Brennstoffeingang 6 dem Brennstoffzellenstapel 5 zugeführt. Ein weiteres Nebenaggregat ist ein hier nicht explizit dargestellter Nachbrenner, der die Abgase des Brennstoffzellenstapels 5 nachverbrennt. Der von dem Brennstoffzellenstapel 5 erzeugte Strom wird über hier nicht dargestellte Leitungen nach außen geführt. Die Hotbox ist von einem weiteren hier nicht dargestellten Gehäuse umgeben, welches das Brennstoffzellensystem nach außen hin abgrenzt. Innerhalb dieses weiteren Gehäuses können weitere Aggregate des Brennstoffzellensystems enthalten sein. Das weitere Gehäuse kann Öffnungen für die Luftzufuhr und für die Ableitung der Abgase aufweisen.

Im Betrieb erzeugen der Brennstoffzellenstapel 5 sowie die Nebenaggregate, insbesondere der Nachbrenner und der Reformer, Abwärme, die über einen hier nicht dargestellten Wärmetauscher zur Nutzung nach außen geführt wird. Dennoch können die einzelnen Aggregate des Brennstoffzellensystems durch den Wärmetauscher nicht so stark gekühlt werden, dass sich das Hotbox-Gehäuse nicht stark erwärmen würde. Daher sind die Aggregate zunächst von einer ersten Wärmedämmung 10 umgeben. Dabei kann es sich beispielsweise um eine Dämmung in Form einer Schüttung handeln. Erfindungsgemäß kann es sich auch um eine Kombination aus festen Wärmedämmplatten, zum Beispiel aus Calciumsilikat, und einer Schüttung handeln. In der Umgebung der Hotbox-Gehäuseoberfläche ist eine zweite Wärmedämmung 11 vorgesehen, wobei es sich beispielsweise um Wärmedämmplatten handelt. Diese können zum Beispiel aus Melaminschaum sein. Eine Äußere Trennwand 15, beispielsweise aus Stahlblech, trägt die zweite Wärmedämmung 11. Eine innere Trennwand 16, beispielsweise aus Stahlblech, bildet eine Wand für die aus einer Schüttung gebildeten ersten Wärmedämmung 10. Die innere Trennwand 16 kann ebenfalls aus einem festen Isoliermaterial, beispielsweise Calciumsilikat, bestehen. Alternativ kann sowohl die innere 16 als auch die äußere Trennwand 15 durch die angrenzende Wärmedämmung gebildet werden.

Zwischen der inneren 16 und der äußeren Trennwand 15 werden Luftkanäle 2, 3 gebildet. Die Luftkanäle verbinden eine am oberen Hotbox-Gehäuserand umlaufende Hotbox-Gehäuseluftzufuhr 4 über ein sich im unteren Bereich befindendes Strömungsverteilelement 19 den Lufteingang 7, 9 des Brennstoffzellenstapels 5 und der Nebenaggregate 8 mit der äußeren Umgebungsluft. Im Betrieb wird somit durch die Hotbox-Gehäuseluftzufuhr 4 Luft angesaugt und durch die Kanäle 2, 3 geleitet. Die Kanäle 2, 3 sind gleichmäßig unter der Oberfläche der gesamten Seitenwand des Hotbox-Gehäuses 1 so angeordnet, dass die Luft überall mit gleichem Massenstrom pro Breite durch die Kanäle 2, 3 strömt. Dies wird einerseits erfindungsgemäß dadurch erreicht, dass die Kanäle die gleiche Tiefe aufweisen, womit unter Tiefe hier die räumliche Erstreckung orthogonal zur Hotbox-Gehäuseoberfläche verstanden wird, während unter Breite die räumliche Erstreckung parallel zur Hotbox-Gehäuseoberfläche und orthogonal zur Strömungsrichtung des Luftstroms 17 verstanden wird. Andererseits wird dies dadurch erreicht, dass im unteren Bereich das Strömungsverteilelement 19 eine Vielzahl von Einstromöffnungen 20 umfasst. Das Strömungsverteilelement 19 bildet zusammen mit einer Abdeckung 18 ein zweidimensionales Kanalsystem, durch das der Luftstrom 17 gleichmäßig von den Einströmöffnungen 20 zu der Öffnung 23 geleitet wird, von wo aus der Luftstrom 17 zu den Lufteingängen 7, 9 des Brennstoffzellenstapels 5 und der Nebenaggregate 8 geleitet wird. Der Brennstoffzellenstapels und/oder die Nebenaggregate weisen Luftfördergebläse auf. Die umlaufend am Rand des Strömungsverteilelements 19 angeordneten Einströmöffnungen 20 bilden Drosseln, die so aufeinander abgestimmt sind, dass der Luftstrom 17 durch die Luftkanäle 2, 3 über die Breite der Kanäle bzw. über den Umfang des Hotbox-Gehäuses ein annähernd gleicher Massenstrom pro Breite aufweist.

An der Oberseite und der Unterseite des Hotbox-Gehäuses 1 ist eine dritte und vierte Wärmedämmung 13, 14 vorgesehen. Auch die dritte und vierte Wärmedämmung 13, 14 kann aus Calciumsilikat oder aus Melaminschaum oder aus einem Verbund aus Calciumsilikat und Melaminschaum gebildet sein. Insbesondere dann die vierte Wärmedämmung 13 als Deckel ausgeführt sein, der nach Einfüllen der als Schüttung ausgebildeten Wärmedämmung das Hotbox-Gehäuse verschließt. Da der Luftstrom 17 über die Hotbox-Gehäuseluftzufuhr 4 am oberen Rand des Hotbox-Gehäuses einströmt, tritt der erfindungsgemäße Effekt an der oberen Hotbox-Gehäuseoberfläche nicht auf, wodurch hier die vierte Wärmedämmung 13 eine höhere Dicke aufweisen muss. Dies ist einerseits vertretbar, wenn das Hotbox-Gehäuse schmal und hoch ist und somit die Oberfläche der oberen Hotbox-Gehäuseoberfläche vergleichsweise klein ist, weswegen das Volumen durch die größere Dicke der Wärmedämmung 13 nicht so stark ins Gewicht fällt. Erfindungsgemäß ist es jedoch auch möglich, den Luftstrom 17 so zu führen, dass er auch entlang der oberen Hotbox-Gehäuseoberfläche geführt wird. Dies kann beispielsweise durch ein zweites Strömungsverteilelement 19 an der Oberseite des Hotbox-Gehäuses erfolgen, wobei die Luft durch eine zentrale Öffnung 23 an der oberen Hotbox-Gehäuseoberfläche einströmt. Die Luftströmung könnte auch außerhalb des Hotbox-Gehäuses und innerhalb des Gehäuses des Brennstoffzellensystems so geführt werden, dass der erfindungsgemäße Effekt eintritt.

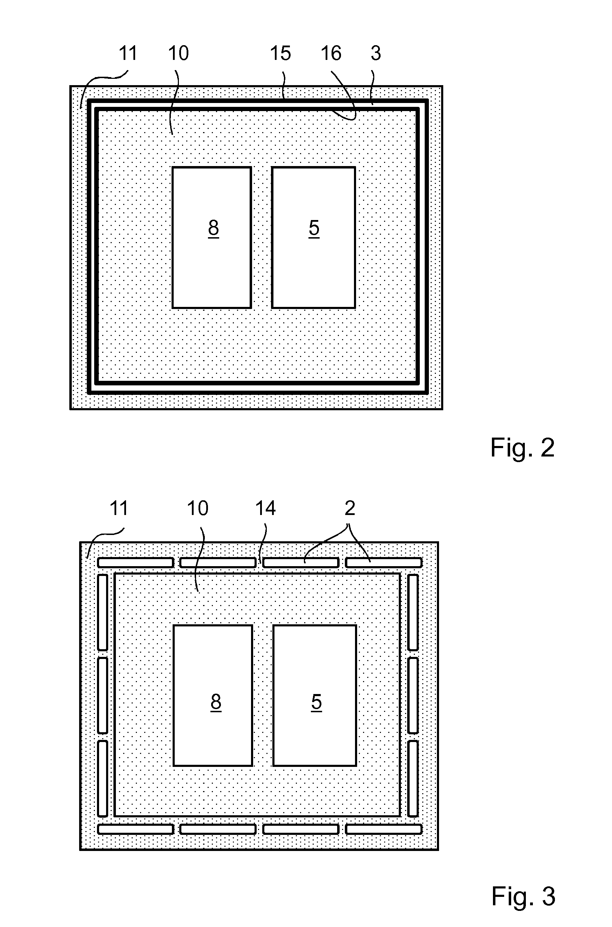

Figur 2 und 3 zeigen zwei Ausführungsvarianten des erfindungsgemäßen Brennstoffzellensystems im Horizontalschnitt. In Figur 2 ist der umlaufende Luftkanal 3 zu erkennen, durch den die Luft senkrecht zur Schnittebene strömt. In dem hier vorliegenden Beispiel sind die äußere Trennwand 15 und die innere Trennwand 16 durch vorzusehen der und nicht dargestellte Distanzstücke miteinander zu verbinden. Wenn die Distanzstücke beispielsweise stiftförmig auf ausgeführt werden, stören diese die Luftströmung nicht. In Figur 2 ist anstelle eines Luftkanals 3 eine Vielzahl von breiten Luftkanälen 2 vorgesehen, die durch Stege 14 voneinander getrennt sind. Weitere Varianten, beispielsweise eine Vielzahl von quadratischen oder runden benachbarten Luftkanälen ist denkbar. Derartige Luftkanäle können beispielsweise durch Strukturen in der Form von Doppelstegplatten oder Wellpappe gebildet werden.

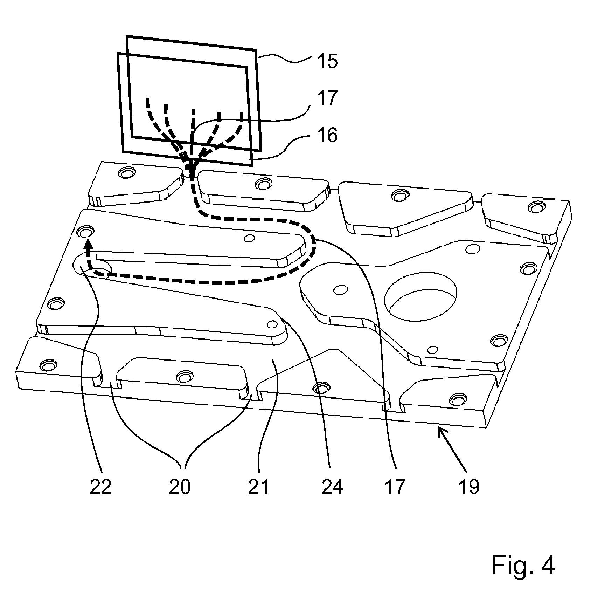

Figur 4 zeigt im Detail das Strömungsverteilelement 19. Das Strömungsverteilelement 19 umfasst am äußeren Rand mehrere Einströmöffnungen 20. Im eingebauten Zustand wird das Strömungsverteilelement 19 durch die in Figur 1 dargestellte Abdeckung 18 abgedeckt. Diese Abdeckung weist im Bereich des Ausströmpunkts 22 eine Öffnung auf, durch die der Luftstrom 17 dem Brennstoffzellenstapel 5 und den Nebenaggregaten 8 zugeführt wird. Das Strömungsverteilelement 19 bildet ein zweidimensionales Kanalsystem. Die Einströmöffnungen 20 sind als Drosseln ausgeführt, die das Strömungsverteilelement 19 mit den Luftkanälen 2, 3 verbinden. Die Breite der Öffnungen 20 ist so bemessen, dass im Betrieb der Luftstrom 17 durch die Luftkanäle 2, 3 über die Breite der Luftkanäle bzw. über den Umfang des Hotbox-Gehäuses 1 eine gleiche Geschwindigkeit aufweist. Stellvertretend ist hier ein Ausschnitt der inneren und äußeren Trennwand 16, 15 sowie der dazwischen gebildete Kanal 3 dargestellt. So ist beispielsweise erkennbar, dass am vorderen Rand die linke Öffnung 20 größer ist als die mittlere Öffnung 20. Dies ist der Tatsache geschuldet, dass im Kanalsystem des Strömungsverteilelements 19 der Strömungsweg für Luft, die durch die Linke Öffnung einströmt, länger ist, als für die mittlere Öffnung. Der damit verbundene Strömungswiderstandsunterschied wird durch die unterschiedlichen Öffnungsquerschnitte kompensiert. Zusätzlich sind auch innerhalb des Kanalsystems Drosselelemente 24 vorgesehen, die die Luftströmung weiter vergleichmäßigen. Dadurch wird vermieden, dass unter der Oberfläche des Hotbox-Gehäuses (1) Totecken, also Bereiche mit stehender Luft oder mit verringerter Luftströmung auftreten, die zu einer erhöhten Oberflächentemperatur an dieser Stelle führen.

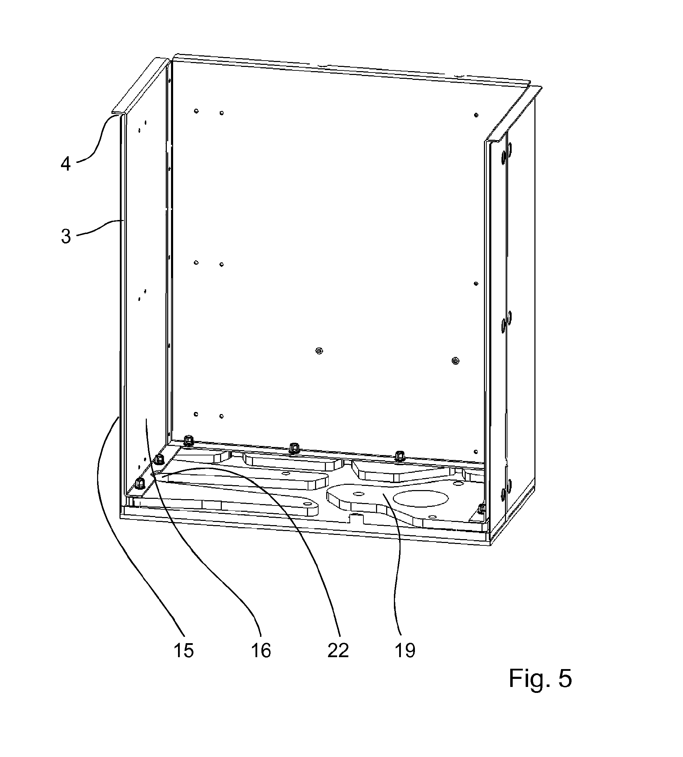

Figur 5 zeigt zusätzlich zu dem Strömungsverteilelement 19 die innere und äußere Trennwand 16, 15 in der gleichen Schnittebene wie Figur 1. Wie zuvor beschrieben strömt die Luft durch die Hotbox-Gehäuseluftzufuhr 4 am oberen Rand ein, strömt durch den umlaufenden Luftkanal 3, der zwischen der inneren und äußeren Trennwand 16, 15 gebildet wird, nach unten und strömt dort durch die Einströmöffnungen 20 in das Kanalsystem des Strömungsverteilelement 19 ein.

### Bezugszeichenliste

- 1: Hotbox-Gehäuse
- 2: Luftkanäle
- 3: Luftkanal
- 4: Hotbox-Gehäuseluftzufuhr
- 5: Brennstoffzellenstapel
- 6: Brennstoffeingang des Brennstoffzellenstapels
- 7: Lufteingang des Brennstoffzellenstapels
- 8: Nebenaggregat
- 9: Lufteingang des Nebenaggregats
- 10: erste Wärmedämmung
- 11: zweite Wärmedämmung
- 12: dritte Wärmedämmung
- 13: vierte Wärmedämmung
- 14: Steg
- 15: äußere Trennwand
- 16: innere Trennwand
- 17: Luftstrom
- 18: Abdeckung
- 19: Strömungsverteilelement
- 20: Einströmöffnung
- 21: Kanalsystem
- 22: Ausströmpunkt
- 23: Öffnung
- 24: Drosselelement

## Patentansprüche

1. Hotbox eines Brennstoffzellensystems zur Kraft-Wärme-Kopplung, umfassend zumindest einen Brennstoffzellenstapel (5) mit einem Brennstoffeingang (6) und mit einem Lufteingang (7), umfassend Nebenaggregate (8) mit Lufteingängen (9), umfassend ein den Brennstoffzellenstapel (5) und die Nebenaggregate (8) umschließendes Hotbox-Gehäuse (1) und umfassend eine Wärmedämmung (10, 11, 12, 13, 14, 15) zur Dämmung der von dem Brennstoffzellenstapel (5) und/oder den Nebenaggregaten (8) ausgehenden Wärme gegenüber der äußeren Oberfläche des Hotbox-Gehäuses (1),
**dadurch gekennzeichnet, dass** die Hotbox Luftkanäle (2, 3) umfasst, die so mit den Lufteingängen (6, 9) verbunden sind, dass die dem Brennstoffzellenstapel (5) oder den Nebenaggregaten (8) zugeführte Luft zumindest teilweise durch die Luftkanäle (2, 3) geleitet wird, dass die Luftkanäle (2, 3) nah an der äußeren Oberfläche des Hotbox-Gehäuses (1) angeordnet sind, im wesentlichen parallel zur äußeren Oberfläche des Hotbox-Gehäuses (1) verlaufen und so ausgebildet sind, dass die im Betrieb durch die Luftkanäle (2, 3) strömende Luft einen Teil der Abwärme des Brennstoffzellenstapels (5) und/oder der Nebenaggregate (8) aufnimmt und dadurch die Luftkanäle (2, 3) so die wärmedämmende Wirkung der Wärmedämmung (10, 11) ergänzen, dass im Betrieb die Temperatur zumindest eines Großteils der Oberfläche des Hotbox-Gehäuses (1) zusätzlich gesenkt wird, und dass die Querschnitte der Luftkanäle (2, 3) und/oder mit den Luftkanälen (2, 3) zusammenwirkende Einströmöffnungen (20) so ausgeführt sind, dass im Betrieb über alle Luftkanäle (2, 3) und/oder über die Breite der Luftkanäle (3), welche parallel zur äußeren Oberfläche des Hotbox-Gehäuses (1) und quer zur Strömungsrichtung der Luft gemessen wird, ein maximal um den Faktor 2 variierender, bevorzugt im wesentlichen der gleiche luftkanalbreitenbezogene Luftmassenstrom vorliegt.

2. Hotbox eines Brennstoffzellensystems nach Anspruch 1, wobei die Luftkanäle (2, 3) außerhalb der ersten Wärmedämmung (10) angeordnet sind.

3. Hotbox eines Brennstoffzellensystems nach Anspruch 1 oder 2, wobei die zweite Wärmedämmung (11) außerhalb der Luftkanäle (2, 3) angeordnet ist.

4. Hotbox eines Brennstoffzellensystems nach einem der vorhergehenden Ansprüche, wobei im Querschnitt orthogonal zur Strömungsrichtung der Luft die Breite eines Luftkanals (2, 3) parallel zur äußeren Oberfläche des Hotbox-Gehäuses (1) signifikant größer, bevorzugt mindestens zehn mal größer ist als die Breite eines Luftkanals (3) senkrecht zur äußeren Oberfläche des Hotbox-Gehäuses (1).

5. Hotbox eines Brennstoffzellensystems nach einem der vorhergehenden Ansprüche, wobei im Strömungsweg der durch den Luftkanal (3) beziehungsweise die Luftkanäle (2, 3) geführten Luft Strömungselemente (13) vorgesehen sind, die so ausgeführt sind, dass im Betrieb im Luftkanal (3) über die Breite des Luftkanals parallel zur äußeren Oberfläche des Hotbox-Gehäuses (1) beziehungsweise in den Luftkanälen (2, 3) im wesentlichen die gleiche Strömungsgeschwindigkeit der Luft vorliegt.

6. Hotbox eines Brennstoffzellensystems nach einem der vorhergehenden Ansprüche, wobei der Luftkanal (3) beziehungsweise die Luftkanäle (2, 3) sich von einer im oberen Bereich des Hotbox-Gehäuses angeordneten umlaufenden schlitzförmigen Hotbox-Gehäuseluftzufuhr (4) bis zu einem Strömungsverteilelement (19) im unteren Bereich des Hotbox-Gehäuses erstrecken, wobei das Strömungsverteilelement (19) so gestaltet ist, dass die Luftströmung (17) von dem Luftkanal (3) beziehungsweise den Luftkanälen (2, 3) zum Lufteingang (7) des Brennstoffzellenstapels (5) und/oder zum Lufteingang (9) der Nebenaggregate (8) geführt wird.

7. Hotbox eines Brennstoffzellensystems nach Anspruch 6, wobei das Strömungsverteilelement (19) mehrere Einströmöffnungen (20) und/oder Drosselelemente (24) umfasst, und wobei die Querschnitte der Einströmöffnungen (20) und der Drosselelemente (24) relativ zueinander so ausgebildet sind, dass im Betrieb über alle Luftkanäle (2, 3) und/oder über die Breite der Luftkanäle (3) parallel zur äußeren Oberfläche des Hotbox-Gehäuses (1) im wesentlichen die gleiche Strömungsgeschwindigkeit der Luft vorliegt.
